(19) Europäisches Patentamt

European Patent Office

Office européen des brevets

(11) **EP 0 840 037 A2**

## (12) EUROPEAN PATENT APPLICATION

(43) Date of publication:
06.05.1998 Bulletin 1998/19

(51) Int Cl.⁶: **F16H 1/32**, H02K 7/116

(21) Application number: 97500173.6

(22) Date of filing: 23.10.1997

(84) Designated Contracting States:
AT BE CH DE DK ES FI FR GB GR IE IT LI LU MC NL PT SE
Designated Extension States:
AL LT LV RO SI

(30) Priority: 30.10.1996 AR 10497096

(71) Applicant: Completa, Vinicio
1004 Buenos Aires (AR)

(72) Inventor: Completa, Vinicio
1004 Buenos Aires (AR)

(74) Representative: Garcia Cabrerizo, Francisco
OFICINA GARCIA CABRERIZO S.L.
Vitruvio 23
28006 Madrid (ES)

### (54) Reducers and/or moto-reducers of speed

(57)  REDUCERS AND/OR MOTO-REDUCERS OF SPEED of the type that includes an motor unit (a) whose axis (1') is linked to means of movement transmission with demultiplying transmitters; characterized in that, as from the motor axis (1'), being a motorreducer, this case includes:

a) a tubular axis (2) that on one hand, has an eccentric perforation (2') with which it is fixed to the mentioned motor axis (1'), while outwardly it presents projected an eccentric radial counterbalance (2"),

b) a crossbeam (3) that-having a perforation (13) that can be crossed by the mentioned tubular axis (2)-each presents teeth (3') at the ends and a set of teeth (8) disposed at a 90° angle therewith, all of them projected from the same face directed in opposed direction to that of the disposition of the motor (a);

c) a satellite engagement (d), which wedged in a sliding manner in the end of the same tubular axis (2), presents in its front face a diametrical groove (8') connected with the teeth (8) of the crossbeam (3);

d) a cup-shaped piece (b) which, starting from a bottom, on one hand conforms an open cavity (9) -to contain the satellite engagement (d)- while on the other hand it has outwardly projected to the driven axis (10) of the reducer; said cavity (9) of the cup-shaped piece (b), conforming an internal-lateral jagging (9') consisting of an interior crown, which being compatible with the jagging of the satellite engagement (d), has more teeth than the latter;

e) and a contention box (c) of all the indicated pieces which, crossed by the driven axis (10) through a bearing (6), presents a set of diametrically opposed grooves (3") in which have their positioned wedge the end teeth (3') of the crossbeam (3), this contention box (c) of the reducer device having, fastening means (12) to the body (1) of the motor (a).

Fig. 1

EP 0 840 037 A2

## Description

## I- BACKGROUND OF THE INVENTION

The present invention is referred to improvements in reducers and/or moto-reducers of speed and it has as main purpose to contribute a device with a much simpler constitution that requires smaller precision in the assembling operations and is less exposed to wearing than the well-known moto-reducers.

A great quantity of devices dedicated to reduce the speed of engines is known and that allow to couple these motors with different types of machines whose requirements of speed can be very varied.

The experience shows that the reducers and/or conventional moto-reducers appeal to multiple couples of engagements to be able to obtain big demultiplications. This results in that these reducers are extremely voluminous, at the same time their pinions and crowns are exposed to a great wearing out that forces to exercise a maintenance in accordance with said wearing out.

On the other hand, by means of the improvements of the present invention this is solved with a device of much smaller dimensions based on an eccentric axis, a crossbeam, a satellite engagement and a cup-shaped piece that conforms the driven axis.

In this way numerous engagements are eliminated which, besides size and wearing out like it has been pointed out, they reduce weight and costs as much to the engagements as to the carcases necessary to conform an adecquate supporting structure.

On the other hand, the own constituent characteristics of the present reducer and/or moto-reducer allows that the group of reducer pieces to be disposed inside a box of contention of very small dimensions and that can be fastened to the body of the engine through corresponding fastening means.

On the other hand in the conventional reducers, in general, there is a great difference in size among the crowns and the pinions that are much smaller that the former, therefore, exposed to a great wearing out. On the other hand by means of the present improvements a pinion that has little difference, as for the quantity of teeth, with regard to the interior crown of the cup-shaped piece is used. This is due to the fact that there is an inverse effect to which takes place with the conventional reducers, since in the case of the present invention the bigger is the satellite engagement, more demultiplication is obtained in the outlet driven axis.

Part of these inconveniences have found solution with the reducer contributed by the Argentine Patent № 212.538. However that reducer is based on the employment of a series of bolts that cross respective perforations of the pinion conferring a degree of complexity to the mechanism, verifiable in the high degree of precision that is required for the component pieces, as well as in the assembling and maintenance of the device.

All these problems are solved with the improvements of the present invention, since with them a reducer and/or moto-reducer is obtained in which the axis of the engine has fixed an eccentric tubular axis in which a satellite engagement wedges in a sliding manner. This satellite engagement, on one hand, gears with a cup-shaped piece that conforms a driven axis while, on the other hand, it is connected with a crossbeam that links it to the box of contention that can be fastened to the body of the engine.

In this way a much simpler reducer and/or moto-reducer is obtained, with an extremely simple mechanism that suffers a more reduced wearing out and of much smaller size that other devices of similar application.

## II-Illustration

For better clarity and understanding of the object of the invention, it is illustrated with several figures in which it has been represented in one of its favorite embodiments, everything to simple title of illustrative example, not limitative:

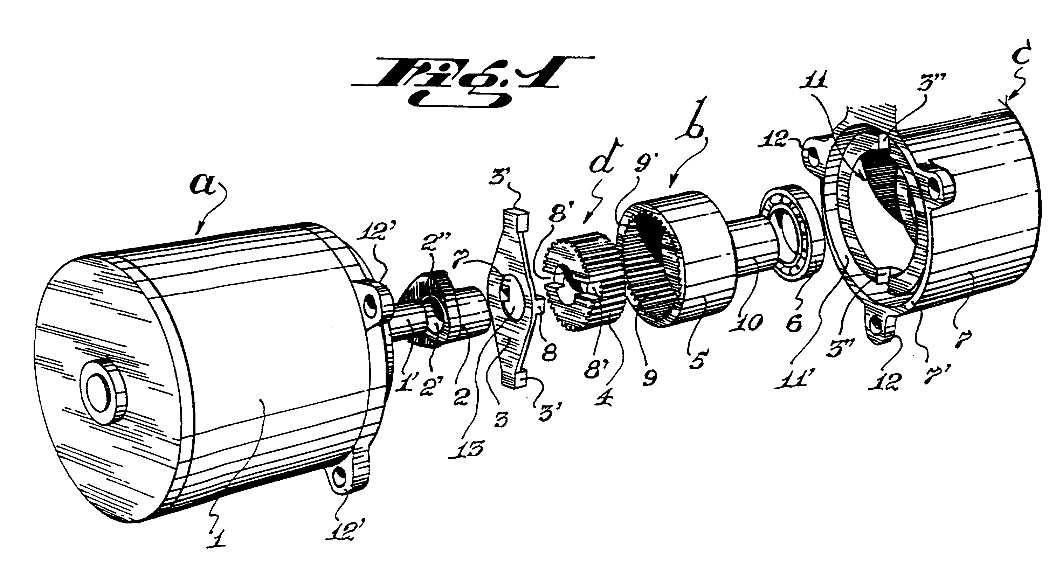

Figure 1 es a view in perspective that allows to appreciate the general conformation of the reducer and/or moto-reducer so much like that of the different pieces that compose it, all which are illustrated positioned in accordance with their disposition in the group. In the left end the body of the engine is observed, while in the right end the contention box is seen. Among both are distinguished, from left to right, the motor axis, the eccentric axis, the crossbeam, the satellite engagement, the cup-shaped piece and the bearing.

In the different figures, the same reference numbers indicate same or corresponding parts, and the groups of several elements have been pointed out with the letters.

**Listing of the main references:**

(a) engine.
(b) cup-shaped piece.
(c) contention box.
(d) satellite engagement.
(1) body of (a).
(1') motor axis or of the engine.
(2) eccentric tubular axis.
(2') eccentric perforation of (2).
(2") counterweight of (2).
(3) crossbeam.
(3') jagging at 180º of (3).
(3") grooves
(4) jagging of (d).
(4') central perforation of (d).
(5) body of the piece (b).
(6) bearing.
(7) body of the box (c).
(7') external border of (7).
(8) teeth of (3) at 90º of (3 ').

(8') diametrical groove of (d).
(9) open cavity of (b).
(9') internal-lateral jagging of (9).
(10) driven axis.
(11) interior cavity of the box (c).
(11') interior border of (c).
(12) fastening means in (c).
(12') fastening means in (a).
(13) central perforation of (3).

## III- Main Object

IMPROVEMENTS IN REDUCERS AND/OR MO-TO-REDUCERS OF SPEED; of the type that includes an motor unit (a) whose axis (1 ') is linked to means of movement transmition with demultiplying transmitters; characterized because, as from the motor axis (1 '), it includes:

a) a tubular axis (2) that on one hand has an eccentric perforation (2 ') with which it is fixed to the mentioned motor axis (1 '), while outwardly it presents projected an eccentric radial counterbalance (2");

b) a crossbeam (3) that -having a perforation (13) that can be crossed by the mentioned tubular axis (2)-each presents teeth (3 ') at the ends and a set of teeth (8) disposed to 90º of (3 "), all them projected, in this case, from the same face guided in opposed direction to that of the disposition of the engine (a);

c) a satellite engagement (d), which wedged in a sliding manner in the end of the same tubular axis (2), presents in its front face a diametrical groove (8 ') connected with the teeth (8) of the crossbeam (3);

d) a cup-shaped piece (b) which, starting from a bottom, on one hand it conforms an open cavity (9) -for the contention of the satellite engagement (d)-while on the other hand it has outwardly projected to the driven axis (10) of the reducer; this cavity (9) of the cup-shaped piece (b), conforming an internal-lateral jagging (9 ') constituent of an interior crown, which being compatible with the jagged one (4) of the satellite engagement (d), has more teeth than the latter (d);

e) and a contention box (c) of all the indicated pieces which, crossed by the driven axis (10) through a bearing (6), presents a set of diametrically opposed grooves (3") in which have their positioned wedge the teeth (3') of the crossbeam (3); having this contention box (c) of the device reducer, fastening means (12) to the body (1) of the engine (a).

## IV-Description

The improvements of the present invention have been practiced in moto-reducers of speed that are of the type that includes an engine unit (a) whose axis (1 ') is linked to a means of movement transmition with demultiplying transmitters.

In general terms the improvements of the present invention refer to a engine (a) or conductive axis (1 ') that has fixed an eccentric tubular axis (2) in which a satellite engagement (d) wedges in a sliding manner. This satellite engagement (d), on one hand, gears with a cup-shaped piece (b) that conforms a driven axis (10) while, on the other hand, is connected to a crossbeam (3) that links to a contention box (c) that can be fastened to the body (1) of the engine (a).

More particularly, from the body (1) of the engine (a) its axis (1 ') is projected on which the eccentric tubular axis is fixed (2). The latter (2), on one hand, has an eccentric perforation (2 ') inside which the mentioned motor axis (1 ') is disposed, while outwardly it presents, projected, an eccentric radial counterbalance (2").

The eccentric tubular axis (2) wedges in a sliding manner in the central perforation (4 ') of the satellite engagement (d). This satellite engagement (d) it presents in its front face a diametrical groove (8 ') by means of which it is connected to the crossbeam (3). The latter (3), on the other hand, possesses a lengthened conformation and has a perforation (13) that can be crossed by the eccentric tubular axis (2). Furthermore the crossbeam (3) has teeth (3 ') at each end and a set of intermediate teeth (8), all of them projected from the same face guided in opposed direction to that of disposition of the engine (a).

The diametrical groove (8 ') of the satellite engagement (d) is connected with the intermediate teeth (8) of the crossbeam (3), in a such way that these teeth (8) constitute sliding guides of the mentioned groove (8 ').

Together with this, the satellite engagement (d) gears with the cup-shaped piece (b). This cup-shaped piece (b), starting from the bottom, on one hand conforms an open cavity (9) of contention of the satellite engagement (d), while, on the other hand, it has a driven axis (10) outwardly projected.

In the open cavity (9) of the cup-shaped piece (b) there is an internal-lateral jaging (9 ') constituent of an interior crown that, being compatible with the jaging (4) of the satellite engagement (d), it has more of teeth than the latter (d).

On the other hand the endteeth (3 ') of the crossbeam (3) find their wedging positioned in a set of diametrically opposed grooves (3") that are found in the contention box (c).

The mentioned contention box (c) of all the indicated pieces conforms an interior cavity (11) that is crossed by the driven axis (10) of the cup-shaped piece (b). This driven axis (10) mounts on the box (c) by means of a bearing (6).

Also, this contention box (c) has an interior border (11 ') that, defining the mentioned cavity (11), conforms the diametrically opposed grooves (3") in which are positioned the end teeth (3 ') of said crossbeam (3).

As the longitude of the crossbeam (3) it is smaller than the distance among the ends of the grooves (3"), these last ones (3") constitute sliding guides of the end teeth (3 ') of said crossbeam (3). The difference of longitude among the ends of the diametrically opposed grooves (3") and the crossbeam (3) is at least equivalent to the excentricity of the tubular axis (2).

The body (7) of the contention box (c) also conforms an external border (7') provided of fastening means (12) connectable by means of fasteners to corresponding fastening means (12 ') of the body (1) of the engine (a) or cover of the reducer.

**The set works in the following way:**

When the engine (a) put into operation, the motor axis (1 ') and the eccentric tubular axis (2) with the counterbalance (2") rotates. The eccentric axis (2), on the other hand, rotates in a sliding manner inside the perforation (4 ') of the satellite engagement (d), with which the latter (d) describes an orbital movement with regard to the motor axis (1 '), although without rotating.

This orbital displacement of the satellite engagement (d) is guided, on one hand, by the intermediate teeth (8) of the crossbeam (3) that are wedged in the diametrical grooves (8 ') and, on the other hand, by the diametrically opposed grooves (3") of the contention box (c) in which the end teeth (3 ') of the crossbeam (3) are positioned and slide.

On the other hand the mentioned orbital displacement, of the satellite engagement (d) without rotation, allows a tangential gear among the jaging (4) of this engagement (d) and the internal-lateral jaging (9 ') of the cup-shaped piece (b). As this internal-lateral jaging (9 ') has more teeth than the jaging (4) of the satellite engagement (d), a reduction according to the following relationship is obtained:

$$Di - di = x$$
$$Re = Di{:}x$$

Being

(Di) quantity of teeth of the internal-lateral jaging of the cup-shaped piece.
(di) quantity of teeth of the jaging of the satellite engagement
(x) the difference among Di and di.
(Re) relationship of obtained demultiplication.

In accordance with this relationship, if an internal-lateral jaging (9 ') of the cup-shaped piece (b) with a Di=30 and a jaging (4) of the satellite engagement (d) with a di=29 is considered, the demultiplication relationship can be calculated in the following way:

$$30 - 29 = 1$$

$$R = 30{:}1$$

In this way for each 30 turns that the motor axis (1') completes, the driven axis (10) gives 1.

It is certain that being the present invention taken to the practice, modifications will be able to be introduced respecting certain details in construction and form, without implying moving away from the fundamental principles that are clearly considered in the claim clauses that continue next:

**Claims**

1. IMPROVEMENTS IN REDUCERS AND/OR MOTO-REDUCERS OF SPEED; of the type that includes an motor unit whose axis is linked to means of movement transmition with demultiplying transmitters; characterized because, as from the motor axis, being a motorreducer, in this case it includes:

    a) a tubular axis that on one hand, has an eccentric perforation with which it is fixed to the mentioned motor axis, while outwardly it presents projected an eccentric radial counterbalance,
    b) a crossbeam that -having a perforation that can be crossed by the mentioned tubular axis -each presents teeth at the ends and a set of intermediate, all them projected from the same face directed in opposed direction to that of the disposition of the engine;
    c) a satellite engagement, which wedged in a sliding manner in the end of the same tubular axis, presents in its front face a diametrical groove connected with the teeth of the crossbeam;
    d) a cup-shaped piece which, starting from a bottom, on one hand it conforms an open cavity -for the contention of the satellite engagement- while on the other hand it has outwardly projected to the driven axis of the reducer; said cavity of the cup-shaped piece, conforming an internal-lateral jagging constituent of an interior crown, which being compatible with the jaging of the satellite engagement, has more teeth than the latter;
    e) and a contention box of all the indicated pieces which, crossed by the driven axis through a bearing, presents a set of diametrically opposed grooves in which have their positioned wedge the end teeth of the crossbeam; this contention box of the reducer device having, fastening means to the body of the engine.

2. IMPROVEMENTS IN REDUCERS AND/OR MOTO-REDUCERS OF SPEED; in accordance with

claim 1, wherein the intermediate teeth of the crossbeam constitute sliding guides of the diametrical groove of the satellite engagement.

3. IMPROVEMENTS IN REDUCERS AND/OR MOTO-REDUCERS OF SPEED; in accordance with claim 1, wherein the diametrically opposed grooves of the contention box constitute sliding guides of the end teeth of the crossbeam.

4. IMPROVEMENTS IN REDUCERS AND/OR MOTO-REDUCERS OF SPEED; in accordance with claim 1, wherein the longitude of the crossbeam is smaller than the distance among the ends of the diametrically opposed grooves.

Fig. 1

EP 0 840 037 A2